# EUROPÄISCHE PATENTSCHRIFT

(11) **EP 0 483 738 B1**
(45) Veröffentlichungstag und Bekanntmachung des Hinweises auf die Patenterteilung: **21.06.1995**
(21) Anmeldenummer: 91118374.7
(22) Anmeldetag: 29.10.1991
(51) Int. Cl.: C02F 1/42, B01J 47/00

(54) **Wasseraufbereitungsgerät und Verfahren zum Aufbereiten von Wasser**
Apparatus and process for water conditioning
Appareil et procédé pour conditionner l'eau

(30) Priorität: 31.10.1990 DE 4034638; 08.11.1990 DE 4035563
(43) Veröffentlichungstag der Anmeldung: 06.05.1992
(73) Patentinhaber: BILZ, Roland, 94034 Passau (DE)
(72) Erfinder: BILZ, Roland, 94034 Passau (DE)
(74) Vertreter: Wasmeier, Alfons, Dipl.-Ing.

(56) Entgegenhaltungen:
- EP-A- 0 249 049
- DE-A- 3 840 276
- DE-U- 8 518 951
- US-A- 4 826 594
- US-A- 4 913 808

## Beschreibung

Die Erfindung bezieht sich auf ein Wasseraufbereitungsgerät zum Entfernen von Schadstoffen, insbesondere Chlor, chlorierten Kohlenwasserstoffen, Pestiziden, Herbiziden, Instektiziden, Schwermetallen und Nitraten aus Leitungswasser Hauptanwendungsgebiet eines solchen Gerätes ist die Bereitung von Trinkwasser aus Leitungswasser für die Verwendung im Haushalt.

Derartige Geräte sind beispielsweise als TWF 2000N der Firma BFS Filtersysteme GmbH, Taunusstein bekannt. Diese bekannten Geräte weisen ein Gehäuse aus Kunststoff mit Deckel, Mantel und Boden auf. Im Deckel ist eine Aktivkohle- Filterkerze untergebracht, die kombiniert durch Absorption und Filtration eine Reinigung des durch das Gerät strömenden Leitungswassers bewirkt. Zur Reinigung wird chemisch reinste, in Pulverform gepreßte Aktivkohle in der Filterkerze verwendet, die Chlor, FCKW, Herbizide, Pestizide, Schwermetalle und Keime beseitigt. Im unteren Teil des Gerätes ist ein austauschbares Säckchen mit Anionenaustauschmaterial vorgesehen, der dem Leitungswasser Nitrat entzieht.

Ein derartiges Gerät hat entscheidende Nachteile: Einerseits muß die Filterkerze relativ häufig ausgewechselt werden; eine derartige Filterkerze ist teuer in der Anschaffung und damit unwirtschaftlich im Betrieb. Auch ist die Filterwirkung nicht optimal und ausreichend effektiv, da das zu reinigende Wasser nicht gleichmäßig und gleichlang unter der Einwirkung des Aktivkohlepulvers gehalten wird, wenn das Wasser durch das Gerät geführt wird, da das Wasser seitlich an die Filterkerze herangeführt und durch sie nach oben geführt wird, so daß die Wegstrecke, die das Wasser in der Filterkerze zurücklegt, davon abhängt, ob das Wasser seitlich weiter unten oder weiter oben am Mantel der Filterkerze eintritt. Auch hat ein derartiges Gerät den Nachteil, daß das zur Beseitigung des Nitrats aus dem Wasser dienende Säckchen mit Anionenaustauschmaterial laufend auf seine Wirkung zu prüfen und regelmäßig gegen ein neues Säcken auszutauschen ist. Dies erhöht ebenfalls die Betriebskosten des Gerätes. Wenn das Anionenaustauschmaterial als Säckchen eingesetzt wird, kann die Wirksamkeit auch nicht optimal sein, da das Zu reinigende Wasser nicht gleichmäßig der Wirkung dieses Materials ausgesetzt ist.

Die D1 (US 49 13 808) betrifft ein Wasserreinigungsgerät, das in einem einteiligen zylindrischen Gehäuse aus korrosionsbeständigem Stahl eine auswechselbare Kartusche enthält, die von unten nach oben ein Bett aus aktiviertem Kohlenstoff mit unterem Wasserzulauf, ein Bett aus Anionen-und Kationentauscherharzen, ein Bett aus aktiviertem Kohlenstoff und ein Submikronfilter mit oberem Wasserauslauf aufweist. Diese einzelnen zu einer Kartusche zusammengefaßten Reinigungsabschnitte werden, wenn sie im Betrieb verbraucht sind, durch Austausch der gesamten Kartusche ersetzt.

Aus D2 (US 48 26 594) ist ein tragbares Wasserreinigungsgerät bekannt, das einen zylindrischen, auswechselbaren Behälter für die Reinigungsflüssigkeit aufweist, in dessen Boden ein Wasserzulauf vorgesehen ist, von dem das zu reinigende Wasser von unten nach oben durch die verschiedenen Abschnitte gedrückt wird, die von unten nach oben aus einem unteren Filter, einem Mischharzbett aus Harzperlen, einem Zwischenfilter, einem Abschnitt aus aktivierter Holzkohle und einem oberen Filter besteht. Das Mischharzbett muß von Zeit zu Zeit regeneriert werden. Hierzu wird ein Regenerationsbecher mit Kochsalzlösung an den Wasserzulauf angeschlossen und die Regeneration von Kationen-und Anionenharzen durch Spülen z.B. mit Kochsalzlösung bei geöffnetem Wasserzulauf vorgenommen. Nach dem Spülen wird der Wasserzufluß unterbrochen, damit das Kochsalz einwirken kann. Anschließend wird mit reinem Wasser nachgespült. Die aktivierte Holzkohle muß nach einer gewissen Betriebsdauer ausgewechselt werden. Hierzu wird der gesamte Innenbehälter ausgewechselt.

Aufgabe der Erfindung ist es, ein Wasseraufbereitungsgerät zu schaffen, das extrem einfach und effektiv im Aufbau ist, das weitgehend wartungsfrei arbeitet, weil es eine außergewöhnlich hohe Standzeit hat und das im Betrieb sehr wirtschaftlich ist.

Gemäß der Erfindung wird dies dadurch erreicht, daß das Gehäuse des Gerätes einen unteren und einen oberen Gehäuseabschnitt aufweist, die voneinander lösbar sind, daß das Gehäuse eine erste, untere Kammer mit Aktivkohle und eine zweite, obere Kammer mit Anionenaustauscherharz aufweist, und daß die beiden Kammern jeweils oben und unten durch Filtervliese abgeschlossen sind.

Das erfindungsgemäße Gerät ist so aufgebaut, daß es zwei übereinander angeordnete, voneinander unabhängige und durch Filtervliese sowie Filtersiebe voneinander getrennte Kammern aufweist. Die untere, Aktivkohle enthaltende Kammer und die obere, Anionenaustauschharz enthaltende Kammer füllen das volle Volumen des Gehäuses aus, so daß die die Wasserreinigung bewirkenden Materialien in optimaler Menge vorliegen, indem das entsprechende Material über den gesamten Querschnitt der Kammern von unten nach oben gleichförmig und durchgehend angeordnet ist.

Die Aktivkohle reinigt in körnigem und porösem Zustand das durchströmende Wasser intensiv und gleichmäßig; selbst sehr kleine Mengen an schädlichen Stoffen, wie Kohlenwasserstoffe, Pestizide, Herbizide, Insektizide und dergl. werden aus dem Trinkwasser beseitigt. Gleichzeitig erfolgt eine Entchlorung des Wassers. Die im erfindungsgemäßen Gerät eingesetzte Aktivkohle ist vorzugsweise zusätzlich mit reinem Silber versetzt, z.B. 0,3% des Eigengewichtes, damit eine Verkeimung des Wassers und eine Bakterienbildung mit Sicherheit ausgeschlossen werden. Das Anionenaustauschmaterial im oberen Gehäuseabschnitt ist ein Nitratharz, das das schädliche Nitrat bindet, so daß eine Umsetzung in krebserregendes Nitrit ausgeschlossen wird. Dieses Anionenaustauschmaterial ist stark basisch und wirkt nitratselektiv, d.h. er bindet gezielt das Nitrat und entzieht es damit dem Wasser. Aufgrund der relativ sehr großen Menge Anionenaustauschmaterial im erfindungsgemäßen Gerät (ca. 1 kg) ist die Standzeit bzw. Aufnahmekapazität des Anionenaustauschers sehr hoch.

Die Nitratbelastung des Anionenaustauschmateriales muß nach einer längeren Betriebsdauer des Gerätes dennoch getestet werden, wozu Nitrat-Teststreifen verwendet werden, die einfach in das abgegebene gefilterte Wasser gehalten werden. Stellt sich eine bereits vorhandene Nitratbelastung heraus, ist das Anionenaustauschmaterial zu regenerieren. Dies geschieht gemäß der Erfindung auf besonders einfache Weise durch den Benutzer selbst, indem die obere Kammer vom Gerät abgeschraubt, der abgeschraubte Teil mit dem Deckel nach unten in den Ausguß gesetzt und der Wasserauslauf nunmehr an den eimerförmigen Behälter angeschlossen wird, so daß die auf den Kopf gestellte Kammer in entgegengesetzter Richtung mit Wasser, versetzt mit Natriumchlorid (Kochsalz), gespült und das Anionenaustauschmaterial gereinigt bzw. regeneriert wird. Diese Regenerierung kann beliebig oft wiederholt werden, ohne daß das Anionenaustauschmaterial Schaden nimmt oder unwirksam wird, so daß auch bei hoher Nitratbelastung des Leitungswassers stets regeneriertes, d.h. einwandfrei wirkendes Anionenaustauschmaterial im Filter vorhanden ist. Erst dadurch ist ein wirtschaftlicher Betrieb eines derartigen Gerätes möglich, da damit die relativ hohen Kosten für den Nachkauf bzw. Neukauf von Ersatzpatronen oder Kartuschen entfallen und die Regenerierung jederzeit vom Benutzer selbst vorgenommen werden kann. Das Auseinandernehmen und Wiederzusammenschrauben der oberen und unteren Gehäusehälfte ist extrem einfach, da der obere Gehäuseabschnitt im unteren Bereich einen festen Boden mit Filter aufweist, das Anionenaustauschmaterial somit nicht aus der oberen Kammer entfernt werden braucht.

Am Wassereinlauf des Gerätes ist eine sich über den gesamten Querschnitt des Gehäuses erstreckende Filterkammer aus Mineralsteinen, z.B. Dolomit-Filtersteinen vorgesehen, ebenso am oberen Ende vor dem Wasserauslauf. Wassereinlauf und Wasserauslauf haben am Übergang zur jeweiligen Filterkammer ein Filtersieb, so daß damit eine Abfilterung von Grobteilen gewährleistet ist. Durch eine spezifische, thermische Zersetzungsreaktion wird die Hälfte der Kohlensäure freigesetzt, die im Dolomit dem Magnesiumanteil zugeordnet ist. Das splitartige, mit Poren durchsetzte Korn bewirkt in Verbindung mit seiner rauhen Oberfläche eine Feinfiltration. Bei durchströmendem Wasser lösen sich die Bikarbonate von Kalzium und Magnesium, deren wertvolle Substanzen dem ausfließenden Wasser beigegeben sind.

Wesentlich für die besonders intensive Wirkung des Wasseraufbereitungsgerätes nach der Erfindung ist die Aufteilung des Innenbereiches des Gerätes in zwei übereinander angeordnete Kammern mit Unterteilungen durch Filtervliese, damit eine klare Trennung der Filtermedien, nämlich Aktivkohle und Anionenaustauschmaterial, erreicht wird, einmal, um eine Vermischung der beiden Filtermedien zu vermeiden, und zum anderen, um eine Regenerierung des Anionenaustauschmaterials jederzeit problemfrei zu ermöglichen, ohne daß dabei die versilberte Aktivkohle belastet wird, die ansonsten beschädigt werden könnte und in ihrer Wirkung nachlassen würde. Des weiteren sind in zwei getrennten Filterkammern, durch Filtervliese abgetrennt, Mineralsteine eingebettet, wobei mehrere, vorzugsweise fünf Filtervliese vorgesehen sind. Das Gehäuse und die mit den Filtermaterialien in Verbindung kommenden Teile bestehen aus hochwertigen Materialien, nämlich V4A Stahl mit Titaneinschluß, lebensmittelechter Kunststoff, Wasserauslauf verchromt, Spezial-Perlator verchromt. Der Wasserdurchlauf erfolgt vom Einlaß zum Auslaß kontinuierlich frei von Turbulenzen und Wirbeln drucklos im Aufstromprinzip, sodaß das Wasser langsam und gleichmäßig über den gesamten Kammerquerschnitt verteilt hochsteigt. Zur drucklosen Wasserverteilung ist die Einlaufkammer mit Kieselsteinen oder mineralischen Materialien gefüllt.

Das Wasseraufbereitungsgerät ist als Ganzes in einem äußeren Behälter angeordnet, der der Verpackungsbehälter ist und der alle für den Betrieb des Wasseraufbereitungsgerätes vorhandenen Teile und Materialien enthält, so daß der äußere Behälter, der in Form eines Eimers mit Deckel und Handgriff ausgebildet ist, eine in sich geschlossene Einheit darstellt. Der eimerförmige Behälter kann wahlweise auch für die Reinigung und Regenerierung des Anionenaustauschmaterials verwendet werden, indem der obere Abschnitt des Gerätes, der von dem Gesamtgerät abgenommen wird, auf dem Kopf stehend in die Spüle gestellt und der Wasserauslauf an den eimerförmigen Behälter angeschlossen wird, so daß Wasser mit NaCl versetzt zu Reinigungszwecken in Richtung vom Deckel zum Boden des oberen Gehäuseabschnittes hindurchgedrückt und damit der Regeneriervorgang durchgeführt wird. Der eimerförmige Behälter ist dabei so anzuordnen, daß ein Höhenunterschied zwischen dem Auslauf des eimerförmigen Behälters, der den Rückspülbehälter darstellt, und dem Wasseraustritt am in dieser Betriebsweise oberen Teil des Gerätes, nämlich am Boden des oberen, abnehmbaren Teils des Gerätes, das zum Rückspülen auf den Kopf gestellt wird, besteht. Anschließend erfolgt ein Klarspülen mit normalem Leitungswasser.

Z.B. in heißen Ländern, bei Dauerbetrieb in Wohnwägen und vergleichbaren Anwendungen besteht die Gefahr, daß Keime in Trinkwasser auftreten. Zu diesem Zweck wird im Wasseraufbereitungsgerät nach der Erfindung in den Auslauf des gereinigten Wassers (grundsätzlich ist dies auch im Zulauf oder an einer beliebigen Zwischenstelle möglich) eine Keimmembrane eingesetzt, die außen am Deckel befestigt oder in den Deckel integriert sein kann. Die Keimmembrane ist ein Filtermedium, ein Filtervlies oder dergleichen, das Bakterien und Keime aus dem aufbereiteten (oder aufzubereitenden) Wasser entfernt. Derartige Keimmembrane sind im Handel erhältlich und werden z.B. von der Firma Sartorius, Deutschland, geliefert. Sie können die Form einer Platte, einer Vielzahl paralleler dünner Scheiben, ziehharmonikaartiger Schichten oder dergleichen haben. Das die Keimmembrane aufnehmende Gehäuse ist mit einer Entlüftung versehen.

Nachstehend wird die Erfindung in Verbindung mit der Zeichnung anhand eines Ausführungsbeispieles erläutert. Es zeigt:
- Fig. 1: schematisch im Schnitt ein Wasseraufbereitungsgerät nach der Erfindung,
- Fig. 2: das Gerät nach Fig. 1 in einer Verpackung als Baueinheit,
- Fig. 3: das Gerät nach Fig. 1 im Regenerierbetrieb der oberen Kammer,
- Fig. 4: eine bevorzugte Ausführungsform eines Wasseraufbereitungsgerätes nach der Erfindung, und
- Fig. 5: eine abgeänderte Ausführungsform des Wasseraufbereitungsgerätes nach Fig. 4.

Das Wasseraufbereitungsgerät 1 besteht aus einem unteren Gehäuseabschnitt 2 und einem oberen Gehäuseabschnitt 3. Der Boden des Gehäuses 1 ist mit 4 bezeichnet. Der untere Gehäuseabschnitt 2 nimmt die untere Kammer 5 auf, in der die Aktivkohle 6 untergebracht ist. Die Aktivkohle 6 füllt den Raum der unteren Kammer 5 aus. Im oberen Gehäuseabschnitt 3 ist die obere Kammer 7 ausgebildet, die das Anionenaustauschmaterial 8 aufnimmt; letzteres füllt die obere Kammer 7. Die untere Kammer 5 ist durch Filtervliese 9, 10 abgeschlossen. Zwischen Filtervlies 10 und Boden 4 ist eine Filterkammer 11 ausgebildet, die mineralische Stoffe aufnimmt. Die Kammer 11 kann nach unten durch ein weiteres Filtervlies 12 zum Boden 4 abgeschlossen sein. In den Boden 4 mündet seitlich ein Wassereinlauf 13, durch den das zu reinigende Wasser in das Wasseraufbereitungsgerät 1 eingeführt wird. Der Wassereinlauf nimmt ein Filtersieb 14 auf. Die obere Kammer 7 des oberen Gehäuseabschnittes 3 ist nach oben durch Filtervliese 15, 16 abgeschlossen; nach oben schließt eine Mineralstoffe enthaltende Filterkammer 17 an, die auf ihrer Oberseite ein weiteres Filtervlies 18 aufweisen kann , das unmittelbar mit dem Deckel 19 des Wasseraufbereitungsgerätes 1 in Verbindung steht. Von der Oberseite der oberen Kammer 7 bzw. der Filterkammer 17 führt ein Wasserauslauf 20 aus dem Deckel 19 heraus, von dem das gereinigte und gefilterte Trinkwasser abgenommen werden kann.

Der Deckel 19 ist oben mit einem Griff 21 versehen, von dem aus sich eine Verbindungsstange 22 konzentrisch und durchgehend durch den unteren und den oberen Gehäuseabschnitt 2, 3 bis zum Boden 4 erstreckt. Die Verbindungsstange 22 besteht aus einem oberen Stangenteil 23 und einem unteren Stangenteil 24, die bei 25 miteinander verschraubt sind. Der obere Gehäuseabschnitt 3 ist mit einem Boden 26 versehen, der mittig um die Verschraubung 25 der Verbindungsstangen 23 und 24 herum eine Ausnehmung 27 besitzt und der bei 28 hochgezogen ist. Mit 30 und 31 sind Durchgänge von der unteren Kammer 5 zur oberen Kammer 7 dargestellt.

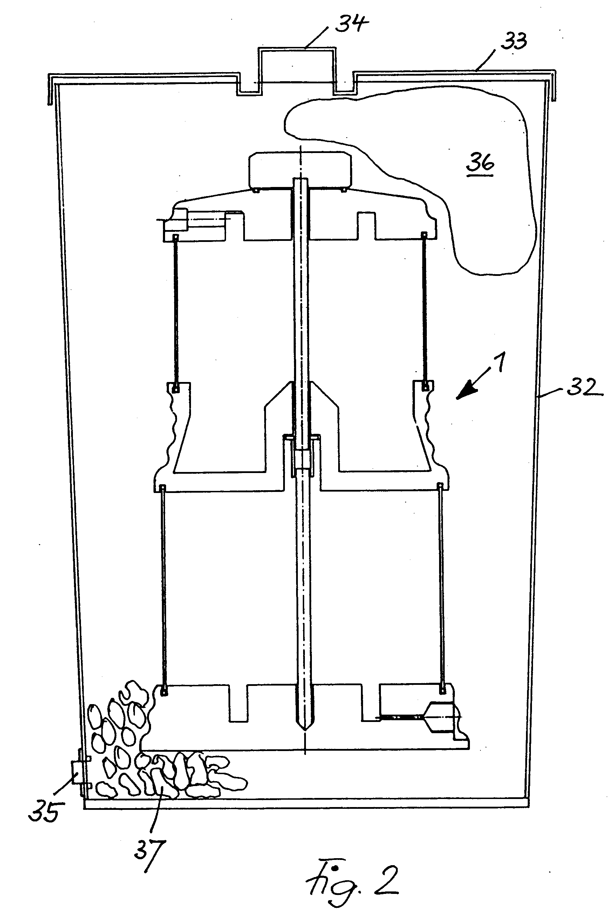

Das Gerät 1 ist in Fig. 2 in einem eimerförmigen Behälter 32 dargestellt, der einen Deckel 33 mit Tragegriff 34 besitzt und der am unteren Ende vorzugsweise mit einem Wasserauslauf 35 versehen ist. Des weiteren ist innerhalb des Eimers ein flexibler Aufnahmebehälter 36 für Zubehörteile für den Betrieb des Gerätes 1 vorgesehen. Das Gerät 1 ist im Behälter 32 dadurch stoß- und geräuscharm verpackt, daß der Freiraum zwischen Gerät 1 und Behälterwand 32 durch Popcorn 37 oder dergl. stoßdämpfendes Material gefüllt ist.

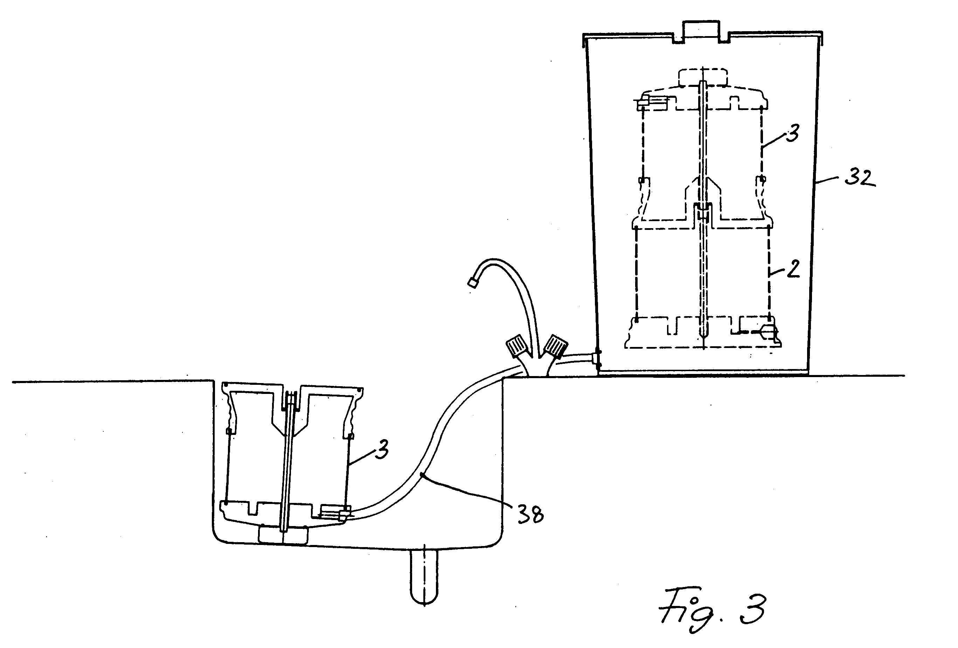

Zum Regenerieren des Anionenaustauschmaterials wird der obere Gehäuseabschnitt 3 mit Deckel 19 vom unteren Gehäuseabschnitt 2 dadurch gelöst, daß der obere Abschnitt 23 der Verbindungsstange von dem unteren Abschnitt 24 losgeschraubt wird, so daß der obere Gehäuseabschnitt 3 von dem unteren Gehäuseabschnitt 2 abgenommen werden kann. Dieser obere Gehäuseabschnitt 3 wird dann umgekehrt, d.h. mit dem Boden 26 nach oben und dem Deckel 19 nach unten in den Ausguß gestellt, wie in Fig. 3 schematisch angedeutet ist, und die Wasserleitung 38 wird mit dem Wasserauslauf 20 und 35 verbunden, so daß Wasser in einer entgegengesetzten Richtung zu der Richtung, in der das Gerät für die Wasseraufbereitung benutzt wird, durch das Anionenaustauschmaterial 8 strömt und damit das Anionenaustauschmaterial gereinigt und regeneriert wird. Durch diesen Reinigungsvorgang wird die in der unteren Kammer 5 aufgenommene Aktivkohle, die vorzugsweise versilbert ist, in keiner Weise belastet bzw. beschädigt.

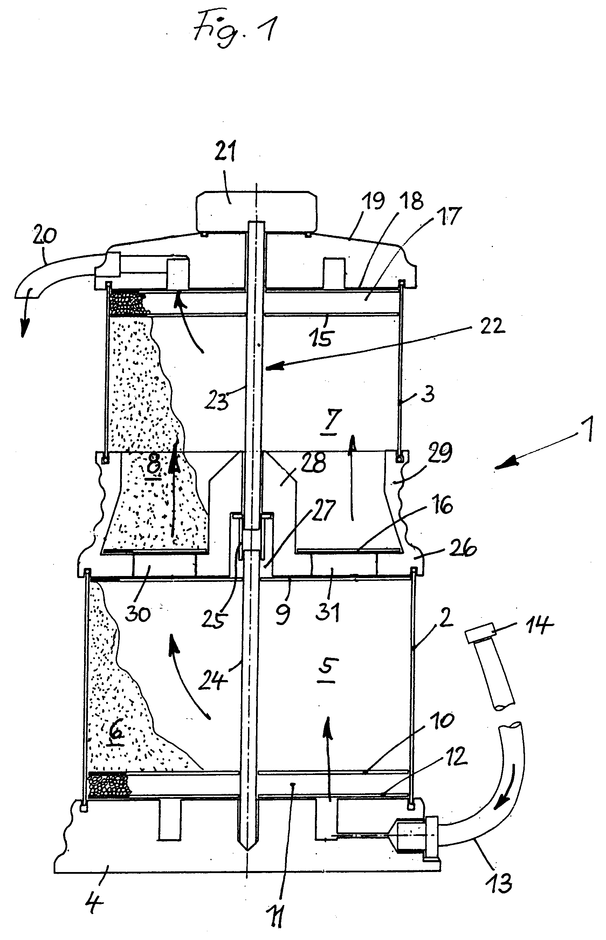

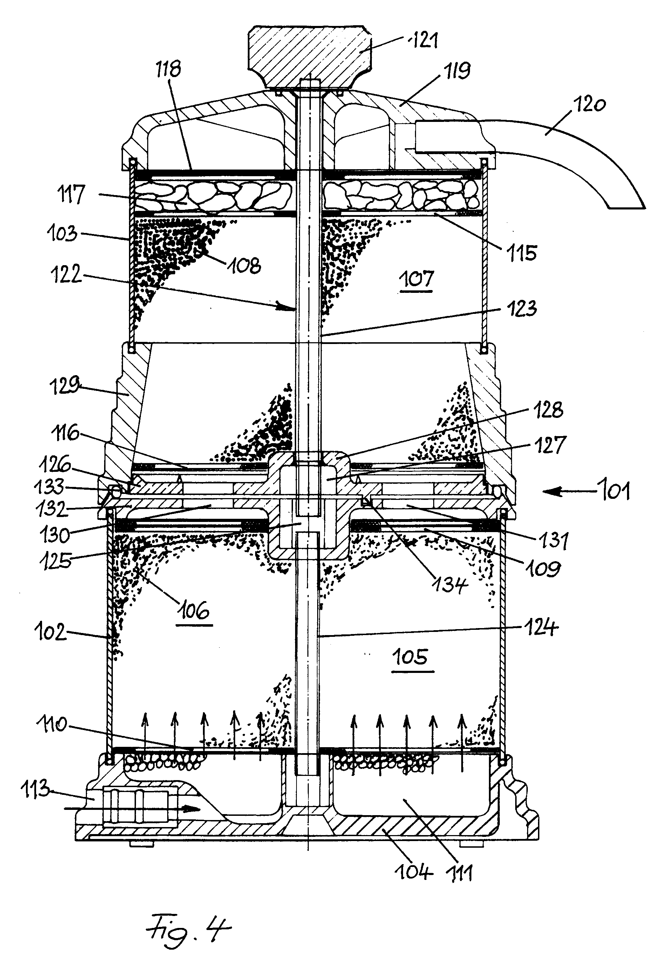

Fig. 4 zeigt ein Wasseraufbereitungsgerät nach der Erfindung, das gegenüber dem Gerät nach Fig. 1 abgeändert ist. Da jedoch weitgehende Übereinstimmung zwischen beiden Ausführungsformen besteht, sind die Elemente, die mit denen des Gerätes nach Fig. 1 übereinstimmen, mit den Bezugszeichen nach Fig. 1, jedoch um 100 vergrößert, bezeichnet. Die Ausführungsform nach Fig. 4 unterscheidet sich von der nach Fig. 1 im wesentlichen wie folgt: Die obere Kammer 107 und die untere Kammer 105 sind durch einen Zwischenboden voneinander getrennt, der aus dem Boden 126 der Kammer 107 und der Deckwand 132 der Kammer 105 besteht. Damit können der obere Teil 103 und der untere Teil 102 des Gerätes problemlos voneinander getrennt und auseinander genommen sowie als getrennte, in sich geschlossene Einheiten gehandhabt werden. Ferner ist die untere Kammer 111 keine gegenüber dem Einlauf getrennte Kammer, sondern das zuströmende Wasser wird direkt über den Einlauf zugeführt; das Filtervlies am Boden der Kammer 111 entfällt hierbei; die Kammer 111 ist mit Kieselsteinen gefüllt und wird drucklos und turbulenzfrei im Aufstromprinzip gleichförmig über den gesamten Querschnitt durchströmt. Deckwand 132 der unteren Kammer 105 und Bodenwand 126 der oberen Kammer 107 sind in Deckung übereinander angeordnet und nehmen zwischen sich eine Dichtung 133 auf, die den Austritt von Wasser aus dem Gerät sperrt. Die Befestigung des unteren und des oberen Gehäuseabschnittes 102 und 103 erfolgt über die Bolzenstange 122. Die Durchgänge 130, 131 sind in der Deckwand 132 und in der Bodenwand 126 deckungsgleich ausgebildet. Die exakte Relativstellung zwischen 126 und 132 wird durch eine Drehsicherung 134 festgelegt. 129 stellt den unteren Abschnitt des Mantels des oberen Gehäuseteiles 103 dar. Griff 121, Deckel 119, Wandabschnitt 129, Böden 126 und 132 sowie Boden 104 mit hochgezogener Seitenwand bestehen aus schlagfestem Kunststoff, die zylindrischen Wandabschnitte 102 und 103 wie auch der Verbindungsbolzen 122 bestehen aus nichtrostendem Stahl

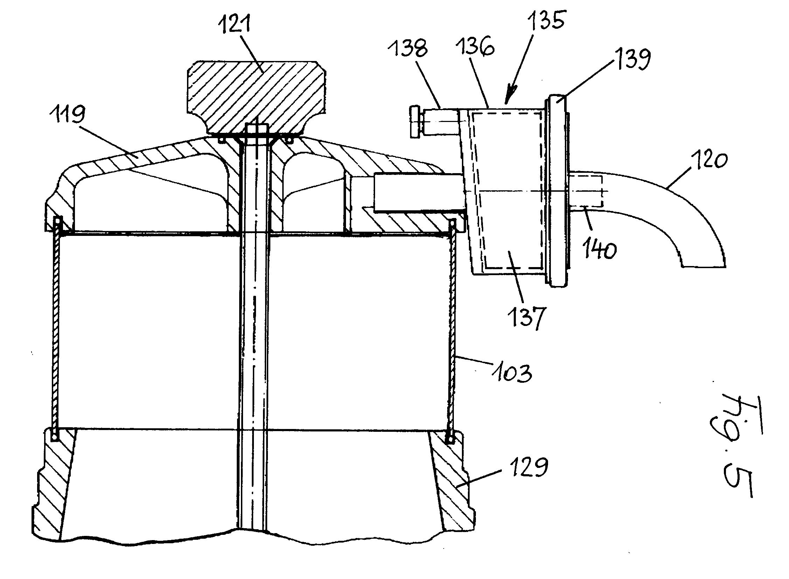

Bei der abgeänderten Ausführungsform nach Fig. 5 ist das eigentliche Wasseraufbereitungsgerät identisch mit dem nach Fig. 4, im Auslauf 120 ist jedoch eine Keimmembranvorrichtung 135 angeordnet, um das aufbereitete bzw. gereinigte Wasser, das aus dem Filtergerät abgegeben wird, einem weiteren Aufbereitungsschritt zu unterziehen, bei dem evtl. noch vorhandene Keime und Bakterien entfernt und ausgesondert werden.

Die Keimmembranvorrichtung 135 ist bei dieser Ausführungsform außen am Deckel 119 angesetzt und in die Auslaufleitung 120 eingeschaltet. Die Keimmembranvorrichtung 135 weist ein Gehäuse 136 auf, das eine Filtermembrane 137 aufnimmt, die plattenförmig, in Form einer Vielzahl einzelner dünner Filterscheiben, als Filtervlies oder als entsprechendes anderes Filtermedium, wie es für das Ausfiltern von Bakterien und Keimen im Handel erhältlich ist, ausgebildet ist. An der höchsten Stelle des Innenraumes des Gehäuses 136 ist eine Entlüftung 138 vorgesehen. Das Gehäuse 136 ist mit dem Deckel 119 starr oder abnehmbar befestigt. Die vom Gerät abgewandte Stirnwand 139 des Gehäuses 136 weist einen zylindrischen Ansatz 140, mit dem der äußere Teil der Auslaufleitung 120 verbunden ist.

## Patentansprüche

1. Wasseraufbereitungsgerät zum Entfernen von Schadstoffen, insbes. Chlor, chlorierten Kohlenwasserstoffen, Pestiziden, Herbiziden, Insektiziden, Schwermetallen und Nitraten aus Leitungswasser, bestehend aus einem Gehäuse mit Deckel, Mantel und Boden, an dessen Deckel ein Wasserauslauf angeordnet ist, an dessen Boden eine Leitungsverbindung zum Wassereinlauf verläuft, und das Aktivkohle und Anionenaustauschmaterial aufweist, die von dem zu reinigenden Leitungswasser in Richtung vom Wassereinlauf zum Wasserauslauf für gereinigtes Wasser durchströmt werden, wobei die Wasseraufbereitungsmaterialien im wesentlichen das volle Volumen des Gehäuseinneren einnehmen,
**dadurch gekennzeichnet**, daß
a) das Gehäuse einen unteren und einen oberen Gehäuseabschnitt (2, 3) aufweist, die voneinander lösbar sind,
b) das Gehäuseinnere eine erste, untere Kammer (5) mit Aktivkohle (6) und eine zweite, obere Kammer (7) mit Anionenaustauschmaterial (8) aufweist,
c) die beiden Kammern (5, 7) jeweils oben und unten durch Filtervliese (9, 10, 15, 16) abgeschlossen sind, und
d) die beiden Kammern (5, 7) im wesentlichen das volle Volumen der unteren und oberen Gehäuseabschnitte (2, 3) einnehmen.

2. Wasseraufbereitungsgerät nach Anspruch 1, dadurch gekennzeichnet, daß eine erste Filterkammer (11) mit mineralischen Stoffen zwischen Gehäuseboden (4) und unterer Begrenzung der unteren Kammer (5) vorgesehen ist, und daß die erste Filterkammer (11) von der unteren Kammer (5) durch ein Filtervlies (10) getrennt ist.

3. Wasseraufbereitungsgerät nach Ansprch 1 oder 2, dadurch gekennzeichnet, daß über der oberen Kammer (7) eine weitere Filterkammer (17) mit Mineralsteinen vorgesehen ist.

4. Wasseraufbereitungsgerät nach einem der Ansprüche 1 - 3, dadurch gekennzeichnet, daß im Übergang vom Wassereinlauf (13) in die erste Filterkammer (11), im Übergang von der zweiten Filterkammer (17) in den Wasserauslauf (20) und im Übergang zwischen unterer und oberer Kammer (5, 7) jeweils ein Filtersieb angeordnet ist.

5. Wasseraufbereitungsgerät nach einem der Ansprüche 1 - 4, dadurch gekennzeichnet, daß eine zweiteilige Spindel (22) in der Mittelachse des Gehäuses (2, 3) angeordnet ist, daß das obere, aus dem Deckel (19) vorstehende Ende der Spindel (22) als Griff (21) ausgebildet ist, daß der obere, die obere Kammer (7) durchsetzende Teil (23) der Spindel mit dem Griff (21) verbunden und das untere Spindelende mit dem oberen Ende des unteren, die untere Kammer durchsetzenden Teils (24) der Spindel (22) lösbar (bei 25) verbunden, vorzugsweise verschraubt ist, und daß das untere Ende des unteren Spindelteiles (24) die untere Kammer (5) durchsetzt und mit dem Boden (4) des Gerätes lösbar verbunden ist.

6. Wasseraufbereitungsgerät nach Anspruch 5, dadurch gekennzeichnet, daß die obere Kammer (7) einen Boden (26) mit mittiger, hochgezogener Erhebung (28) aufweist, die eine zentrische, koaxiale Ausnehmung (27) mit der oberen Begrenzung der unteren Kammer (5) ausbildet, und daß die Schraubverbindung (25) zwischen oberem und unterem Spindelteil (23, 24) in dieser Ausnehmung (27) angeordnet ist.

7. Wasseraufbereitungsgerät nach einem der Ansprüche 1 - 6, dadurch gekennzeichnet, daß die Aktivkohle (6) in der unteren Kammer (5) mit Silber versetzt ist, um ein Verkeimen und eine Bakterienbildung zu verhindern, wobei der Silberanteil vorzugsweise etwa 0,3% des Eigengewichtes der Aktivkohle beträgt.

8. Wasseraufbereitungsgerät nach einem der Ansprüche 1 - 7, dadurch gekennzeichnet, daß das Gerät (1) von einem eimerförmigen Behälter (32) umgeben ist, der als Verpackung des Gerätes dient und der die gesamten, für den Betrieb des Gerätes erforderlichen Zubehörteile enthält sowie als Behälter zum Regenerieren des Anionenaustauschmaterials (8) verwendbar ist, indem der obere Teil (3, 19) des Gerätes (1) vom unteren Teil (2, 4) gelöst und verkehrt herum in den Behälter (32) oder in die Spüle gestellt wird.

9. Verfahren zum Aufbereiten von Wasser und zum Entfernen von Schadstoffen, insbes. Chlor, chlorierten Kohlenwasserstoffen, Pestiziden, Herbiziden, Insektiziden, Schwermetallen und Nitraten aus Leitungswasser, bei dem das zu reinigende Leitungswasser durch eine Aktivkohleschicht und eine Schicht aus Ionenaustauschmaterial geführt wird, wobei das vom Wassereinlauf am Boden des Gehäuses, das einen oberen und einen unteren Gehäuseabschnitt aufweist, einströmende Leitungswasser über den gesamten Gehäusequerschnitt verteilt durch das gesamte Gehäuse gleichförmig und mit gleicher Geschwindigkeit von unten nach oben hindurchgeführt und am Wasserauslauf aus dem Gehäuse abgegeben wird, und der von unten nach oben gedrückte Wasserstrom im Bereich des unteren und des oberen Gehäuseabschnittes durch einen im wesentlichen durchgehend konstanten Querschnitt der Aktivkohlefüllung und der Anionenaustauschmaterialfüllung geführt wird, **dadurch gekennzeichnet**, daß der obere und der untere Gehäuseabschnitt voneinander trennbar sind und das zu reinigende Leitungswasser der Reihe nach durch ein Filtervlies, eine mineralische Stoffe aufnehmende untere Schicht, ein weiteres Filtervlies, eine Aktivkohle aufnehmende untere Kammer, einen Durchgang zwischen einem unteren und einem oberen Gehäuseabschnitt, ein weiteres Filtervlies, eine das Anionenaustauschmaterial aufnehmende obere Kammer, ein weiteres Filtervlies, eine mineralische Stoffe aufnehmende obere Schicht und ein daran anschließendes Filtervlies zum Wasserauslauf durchströmt.

10. Verfahren nach Anspruch 9, dadurch gekennzeichnet, daß zum Regenerieren des Anionenaustauschmaterials der obere Teil des Gerätes vom unteren Teil gelöst und verkehrt herum in ein Gefäß oder in die Spüle gestellt wird, daß der Wasserauslauf am Deckel des auf den Kopf gestellten Gerätes mit der Wasserzuleitung aus einem einen Verpackungsbehälter darstellenden eimerförmigen Behälter verbunden wird, und daß mit NaCl versetztes Wasser durch den oberen Gehäuseabschnitt in entgegengesetzter Richtung zur Richtung des Normalbetriebes gedrückt wird (Gegenstrom-Regeneration).

## Claims

1. A water conditioning apparatus for removing contaminating materials, especially chloride, chlorinated hydrocarbons, pesticides, herbicides, insecticides, heavy metals and nitrates from pipe water, comprising a casing with a cover, shell and bottom, a water outlet in the cover at the bottom of which a pipe connection is passed to the water inlet, and activated carbon and anion exchange material located therein, through which the contaminated water to be conditioned flows in the direction from the water inlet to the water outlet for purified water, whereby the water conditioning materials fill substantially the entire volume of the interior of the casing,
**characterised in** that
a) the casing comprises a lower and an upper portion housing (2, 3) which portions are removable from each other,
b) the interior of the casing comprises a first, lower chamber (5) with activated carbon (6) and a second, upper chamber (7) with anion exchange material (8),
c) both chambers (5, 7) each are closed at the top and at the bottom by filter fleeces (9, 10, 15, 16), and
d) the two chambers (5, 7) substantially fill the entire volume of the lower and the upper casing portions (2, 3).

2. A water conditioning apparatus according to claim 1, characterised in that a first filter chamber (11) with mineral materials is provided between the bottom (4) of the casing and the lower restriction of the lower chamber (5), and that the first filter chamber (11) is separated from the lower chamber (5) by a filter fleece (10).

3. A water conditioning apparatus according to claim 1 or 2, characterised in that above the upper chamber (7) a further filter chamber (17) with mineral stones is provided.

4. A water conditioning apparatus according to one of claims 1 - 3, characterised in that within the transition of the water inlet (13) into the first filter chamber (11), within the transition of the second filter chamber (17) into the water outlet (20) and within the transition between the lower and the upper chamber (5, 7) a filter screen each is provided.

5. A water conditioning apparatus according to one of claims 1 - 4, characterised in that a two-part shaft (22) is provided in the centre axis of the casing (2, 3), that the upper end of the shaft (22) extending beyond the cover (19) is formed as a handle (21), that the upper portion (23) of the shaft passing through the upper chamber (7) is connected with the handle (21) and the lower shaft end is connected with the upper end of the lower portion (24) of the shaft (22) passing through the lower chamber in a removable manner (at 25), preferably is screwed thereto, and that the lower end of the lower shaft portion (24) passes through the lower chamber (5) and is connected with the bottom (4) of the apparatus in a removable manner.

6. A water conditioning apparatus according to claim 5, characterised in that the upper chamber (7) includes a bottom (26) with a central raised projection (28) which forms a central coaxial recess (27) with the upper restriction of the lower chamber (5), and that the screwing connection (25) between the upper and the lower shaft portion (23, 24) is provided within said recess (27).

7. A water conditioning apparatus according to one of claims 1 - 6, characterised in that the activated carbon (6) within the lower chamber (5) is mixed with silver in order to prevent nucleus and germ formation, whereby the silver proportion preferably is approx. 0,3% of the weight of the activated carbon.

8. A water conditioning apparatus according to one of claims 1 - 7, characterised in that the apparatus (1) is arranged within a bucket-type container (32) which is used for shipment purposes and which includes the entire accessories required for operating the apparatus, and which also can be used as the container for regenerating the anion exchange material (8) by removing the upper portion (3, 19) of the apparatus (1) from the lower portion (2, 4), and putting the upper portion upside down into the container (32) or into the sink.

9. A method for conditioning water and for removing contaminating materials, especially chloride, chlorinated hydrocarbon materials, pesticides, herbicides, insecticides, heavy metals and nitrates from pipe water, which is passed through an activated carbon layer and a layer from ion exchanging material, whereby the pipe water flowing from the water inlet at the bottom of the casing, which is provided with an upper and a lower casing section, is distributed over the entire cross-section of the casing continuously and with constant speed through the entire casing from the bottom to the top, and is discharged at the water outlet out of the casing, and the water flow urged from the bottom to the top is passed within the area of the lower and the upper casing section through a substantially continuous constant cross-section of the filler of activated carbon and the filler of anion exchange material, characterised in that the upper and the lower casing section can be separated from each other and the pipe water to be purified is passed in sequence through a filter fleece, a bottom layer including mineral materials, a further filter fleece, a lower chamber including activated carbon, a passage between a lower and an upper casing section, a further filter fleece, an upper chamber including anion exchange material, a further filter fleece, an upper layer including mineral materials, and a joining filter fleece to the water outlet.

10. Method accordng to claim 9, characterised in that for regenerating the anion exchanging material the upper portion of the apparatus is removed from the lower portion and is arranged upside down within a bucket or the sink, that the water outlet at the cover of the inverted apparatus is connected with the water supply from a bucket type container forming the shipping container, and that water provided with NaCl is urged through the upper casing section in the opposite direction in view of the normal operation (counterflow regeneration).

## Revendications

1. Appareil de traitement d'eau pour éliminer les substances nocives, notamment le chlore, les hydrocarbures chlorés, les pesticides, les herbicides, les insecticides, les métaux lourds et les nitrates dans l'eau de conduite, comprenant un boîtier avec couvercle, chemise et fond, sur le couvercle duquel est disposé un écoulement d'eau au fond duquel passe un raccordement de conduite allant vers l'arrivée d'eau, et qui présente du charbon actif et du matériau d'échange anionique, charbon qui est parcouru par l'eau de robinet à nettoyer dans le sens arrivée d'eau - écoulement d'eau pour l'eau nettoyée, les matériaux de traitement de l'eau occupant principalement le volume entier de l'intérieur du boîtier, caractérisé en ce que
a) le boîtier présente un tronçon inférieur et un tronçon supérieur (2, 3) qui sont détachables l'un de l'autre,
b) l'intérieur du boîtier présente une première chambre (5) inférieure avec charbon actif (6) et une deuxième chambre (7) supérieure avec matériau d'échange anionique (8),
c) les deux chambres (5, 7) sont terminées respectivement en haut et en bas par des tissus filtrants (9, 10, 15, 16) et
d) les deux chambres (5, 7) occupent principalement le volume entier des tronçons de boîtier (2, 3) inférieur et supérieur.

2. Appareil de traitement d'eau selon la revendication 1, caractérisé en qu'une première chambre à filtre (11) avec des substances minérales est prévue entre le fond du boîtier (4) et la limite inférieure de la chambre inférieure (5) et en ce que la première chambre à filtre (11) est séparée de la chambre (5) inférieure par un tissu filtrant (10).

3. Appareil de traitement d'eau selon les revendications 1 ou 2, caractérisé en ce qu'une deuxième chambre à filtre (17) avec des pierres minérales est prévue au-dessus de la chambre (7) supérieure.

4. Appareil de traitement d'eau selon l'une des revendications 1 à 3, caractérisé en ce qu'un tamis filtrant est disposé respectivement dans la jonction de l'arrivée d'eau (13) à la première chambre à filtre (11), dans la jonction de la deuxième chambre à filtre (17) à l'écoulement d'eau (20) et dans la jonction entre la chambre inférieure et la chambre supérieure (5, 7).

5. Appareil de traitement d'eau selon l'une des revendications 1 à 4, caractérisé en ce qu'une broche (22) en deux parties est disposée dans l'axe central du boîtier (2, 3), en ce que l'extrémité supérieure de la broche (22), dépassant du couvercle (19), est conçue comme une poignée (21), en ce que la partie (23) supérieure de la broche, traversant la chambre (7) supérieure, est reliée à la poignée (21) et l'extrémité inférieure de la broche est reliée de façon amovible (en 25) à l'extrémité supérieure de la partie (24) inférieure, traversant la chambre inférieure, de la broche (22), est vissée de préférence, et en ce que l'extrémité inférieure de la partie inférieure de la broche (24) traverse la chambre inférieure (5) et est reliée de façon amovible au fond (4) de l'appareil.

6. Appareil de traitement d'eau selon la revendication 5, caractérisé en ce que la chambre supérieure (7) présente un fond (26) avec une proéminence (28) centrale surélevée, qui forme une cavité (27) centrale coaxiale avec la limite supérieure de la chambre inférieure (5), et ce que le raccord vissé (25) est disposé entre les parties supérieure et inférieure de la broche (23, 24) dans cette cavité (27).

7. Appareil de traitement d'eau selon l'une des revendications 1 à 6, caractérisé en ce que le charbon actif (6) dans la chambre (5) inférieure est mélangé avec de l'argent pour empêcher la formation de germes et de bactéries, la part d'argent représentant de préférence environ 0,3% du poids propre du charbon actif.

8. Appareil de traitement d'eau selon l'une des revendications 1 à 7, caractérisé en ce que l'appareil (1) est entouré d'un réservoir (32) en forme de seau qui sert d'emballage pour l'appareil et qui contient les accessoires pour le fonctionnement de l'appareil et peut être utilisé comme réservoir pour la régénération du matériau d'échange anionique (8), la partie (3, 19) supérieure de l'appareil étant détachée de la partie (2, 4) inférieure et étant posée à l'envers dans le réservoir (32) ou dans l'évier.

9. Procédé pour traiter l'eau et pour éliminer les substances nocives, notamment le chlore, les hydrocarbures chlorés, les pesticides, les herbicides, les insecticides, les métaux lourds et les nitrates provenant de l'eau de conduite, avec lequel l'eau de robinet à nettoyer est guidée par une couche de charbon actif et une couche à base de matériau d'échange anionique, l'eau de conduite entrant depuis l'arrivée d'eau au fond du boîtier, qui présente un tronçon supérieur et un tronçon inférieur, traversant de bas en haut tout le boîtier de façon uniforme et à vitesse identique, avec une répartition sur toute la section du boîtier, et étant débitée sur l'écoulement d'eau à la sortie du boîtier, et le courant d'eau refoulé de bas en haut étant guidé dans la zone des tronçons inférieur et supérieur du boîtier par une section principalement continuellement constante de la charge de charbon actif et de la charge de matériau d'échange anionique, caractérisé en ce que les tronçons supérieur et inférieur du boîtier peuvent être séparés l'un de l'autre et en ce que l'eau de conduite traverse dans l'ordre respectif un tissu filtrant, une couche inférieure renfermant des substances minérales, un autre tissu filtrant, une chambre inférieure recevant du charbon actif, un passage entre un tronçon de boîtier inférieur et un tronçon de boîtier supérieur, un autre tissu filtrant, une chambre supérieure recevant du matériau d'échange anionique, un autre tissu filtrant, une couche supérieure recevant des substances minérales et un tissu filtrant consécutif allant vers l'écoulement d'eau.

10. Procédé selon la revendication 9, caractérisé en ce que, pour la régénération du matériau d'échange anionique, la partie supérieure de l'appareil est séparée de la partie inférieure et est posée à l'envers dans un récipient ou dans l'évier, en ce que l'écoulement d'eau sur le couvercle de l'appareil mis sur la tête est relié à l'arrivée d'eau à partir d'un réservoir en forme de seau présentant un réservoir d'emballage, et en ce que de l'eau mélangée avec du NaCl est refoulée à travers la section supérieure du boîtier dans le sens opposé en direction de la marche normale (régénération du contre-courant).
